# EUROPÄISCHE PATENTANMELDUNG

(11) **EP 0 816 441 A1**
(43) Veröffentlichungstag der Anmeldung: **07.01.1998**
(21) Anmeldenummer: 97109552.6
(22) Anmeldetag: 12.06.1997
(51) Int. Cl.: C09C 3/06, C09C 3/00, C09C 1/36, C09C 1/24, C09D 7/12, C08K 9/02, C08K 9/04, D21H 17/67, D21H 19/38

(54) **Verfahren zur Herstellung anorganisch beschichteter Pigmente und Füllstoffe**

(30) Priorität: 25.06.1996 DE 19625267
(71) Anmelder: BAYER AG, 51368 Leverkusen (DE)
(72) Erfinder: Braun, Rolf-Michael, Dr., 47802 Krefeld (DE); Kirschkewitz, Jürgen, Dr., 40883 Ratingen (DE); Rieck, Hilmar, Dr., 47839 Krefeld (DE); Holtmann, Udo, Dr., Qd C7, Lt 10-Lauro de Freitas, Bahia (BR)

(57) **Zusammenfassung**

Die Erfindung betrifft ein Verfahren, wobei Pigmente und Füllstoffe mit einem oder mehreren Oxiden, Hydroxiden oder Oxidhydraten von Metallen ausgewählt aus Titan, Aluminium, Cer, Zirkonium, Silizium und Zink, (anorganisch) beschichtet werden und wobei die äusserste Schicht aus Aluminiumhydroxid oder Aluminiumoxidhydrat besteht, welche durch Reaktion einer sauren mit einer alkalischen Verbindung des Aluminiums in wässeriger Lösung hergestellt wurde(n).

Beschrieben werden auch die Verwendungen dieser Zusammensetzungen.

## Beschreibung

Die Erfindung betrifft ein Verfahren zur Herstellung anorganisch beschichteter Pigmente und Füllstoffe sowie deren Verwendung.

Anorganische Pigmente, wie z.B. Eisenoxid, Titanoxid, Rutilmischphasen und Spinelle werden zu einem erheblichen Anteil in Farben, Lacken, Kunststoffen und Papier eingesetzt. Zur Verbesserung und Stabilisierung der verschiedenen physikalischen Eigenschaften, wie z.B. Farbe, Textur, Dauerhaftigkeit, Temperaturbeständigkeit, Glanzbeständigkeit gegenüber Kreiden und Vergilben sowie Wetterbeständigkeit werden die Pigmente und Füllstoffe im Rahmen ihrer Herstellung häufig nachbehandelt. Diese Behandlung besteht im Überziehen des Pigments oder Füllstoffs mit geringen Mengen eines oder mehrerer Oxide, Oxidhydrate oder Hydroxide von Metallen. Neben beispielsweise Silicium-, Titan- und Zirkonverbindungen kommen dabei Aluminiumverbindungen eine besondere Bedeutung zu.

Gewöhnlich wird die Behandlung in der Weise durchgeführt, daß man zunächst eine wässrige Suspension des Pigments oder Füllstoffs herstellt und die gewünschten Metalloxidhydrate, -oxide oder -hydroxide aus den der Aufschlämmung zugesetzten Metallsalzlösungen ausfällt. Die Pigmente oder Füllstoffe können z.B. mit Zirkoniumdioxid, Aluminiumoxid oder Titandioxid überzogen werden, indem der Suspension eine Lösung, z.B. der Sulfate oder Chloride der Metalle in gewünschter Menge und Konzentration, zugesetzt wird, worauf der pH-Wert der Suspension durch Zusatz einer Base oder eines alkalischen Fällmittels nahezu neutral eingestellt wird. Als Base oder alkalische Fällmittel werden z.B. Ammoniumhydroxid, Natriumhydroxid oder Kaliumhydroxid eingesetzt, wie z.B. in DE-A 1 592 937 beschrieben. Für Überzüge aus Siliciumdioxid können der Suspension auch alkalische Lösungen von Silikaten, z.B. Natriumsilikat, zugesetzt werden und mit sauren Fällmitteln, wie Mineralsäuren, gewöhnlich Schwefelsäure, wie z.B. in EP-A 0 078 632 beschrieben, ausgefällt werden.

Im Anschluß an die Nachbehandlung wird das beschichtete Pigment oder der beschichtete Füllstoff aus der Suspension abgetrennt (z.B. durch Filtration, Sedimentation oder Zentrifugieren), durch Waschung von den löslichen Salzen befreit, getrocknet und gegebenenfalls vor der abschließenden Feinstmahlung außerdem organisch modifiziert.

Für eine ausreichende Verarbeitung der auf diese Weise hergestellten Pigmente oder Füllstoffe ist insbesondere erforderlich, daß die Pigmente oder Füllstoffe flockungsstabil sind, hohe spezifische Widerstände und günstige rheologische Eigenschaften aufweisen. Diese Eigenschaften hängen nicht nur von der Zusammensetzung und der Anzahl der Schichten ab, sondern werden auch von den Randbedingungen der anorganischen Nachbehandlung, insbesondere vom pH-Wert, von der Temperatur, von Menge und Art der Behandlungschemikalien und von der Intensität der vor der Trocknung der Pigmente oder Füllstoffe erfolgenden Waschung bestimmt (z.B. GB-A 1 034 345, insbesondere Beispiel 1).

Um die für die jeweiligen Anwendungen erforderlichen Eigenschaften, wie z.B. Flockungsstabilität oder spezifischer Widerstand nach den oben beschriebenen Verfahren zu erzielen, ist ein sehr hoher Aufwand bei der Waschung der Pigmente oder Füllstoffe zu betreiben, der sich z.B. in einem hohen Waschwasserbedarf und/oder einer großen erforderlichen Filterfläche äußert.

Aufgabe der vorliegenden Erfindung war es daher, ohne das sonstige Eigenschaftsbild der Pigmente oder Füllstoffe zu beeinträchtigen, den Waschwasserverbrauch zu reduzieren, die zur Waschung benötigte Filterfläche zu verkleinern bzw. die Waschkapazität zu erhöhen.

Diese Aufgabe konnte überraschenderweise durch das erfindungsgemäße Verfahren gelöst werden.

Gegenstand der Erfindung ist ein Verfahren zur Herstellung von anorganisch beschichteten Pigmenten oder Füllstoffen, wobei eine wässrige Suspension des entsprechenden unbehandelten Pigments oder Füllstoffs vorgelegt wird, mindestens eine Schicht eines Oxids, Hydroxids oder Oxidhydrats eines oder mehrerer Metalle aus der Gruppe bestehend aus Titan, Aluminium, Zirkonium, Silicium, Cer und Zink durch Zugabe der entsprechenden Metallsalzlösungen aufgefällt wird, wobei die äußerste Schicht eine Schicht aus Hydroxid oder Oxidhydrat des Aluminiums ist, die wässrige Suspension vor Abtrennung der Pigmente oder Füllstoffe etwa neutral gestellt wird, die so behandelten Pigmente oder Füllstoffe abgetrennt werden, die abgetrennten Pigmente oder Füllstoffe gewaschen, gegebenenfalls getrocknet und organisch modifiziert werden und dann desagglomeriert werden, welches dadurch gekennzeichnet ist, daß zur Herstellung der äußeren Schicht aus Aluminiumhydroxid oder Aluminiumoxidhydrat eine sauer reagierende, wasserlösliche Verbindung des Aluminiums in einer Menge von 0,1 bis 3 Gew.-%, berechnet als Al₂O₃ und bezogen auf Pigment bzw. Füllstoff, und eine wasserlösliche, alkalisch reagierende Verbindung des Aluminiums in einer Menge von 0,1 bis 3 Gew.-%, berechnet als Al₂O₃ und bezogen auf Pigment bzw. Füllstoff, der Pigment- oder Füllstoffsuspension gleichzeitig oder nacheinander zugesetzt werden und zwar in einem solchen Mengenverhältnis, daß sich am Ende der Zugabe ein pH-Wert von 4 bis 10 in der Suspension einstellt, ohne daß weitere sauer oder alkalisch reagierende Komponenten zugesetzt werden.

Die wäßrige Pigment- oder Füllstoffsuspension wird vorzugsweise vor der anorganischen Nachbehandlung auf Feststoffgehalte von 100 bis 300 g/l, besonders bevorzugt von 150 bis 250 g/l, auf Temperaturen von 30 bis 90°C, besonders bevorzugt 40 bis 60°C eingestellt.

Eine besondere Ausführungsform des erfindungsgemäßen Verfahrens ist, daß nur eine Aluminiumoxidhydrat- oder -hydroxid-Schicht auf das Pigment oder den Füllstoff aufgebracht wird.

Eine weitere besondere Ausführungsform des erfindungsgemäßen Verfahrens ist, daß vor der Aluminiumoxidhydrat- oder -hydroxid-Fällung eine oder mehrere Beschichtungen von Oxiden, Hydroxiden oder Oxidhydraten von Metallen aus der Gruppe Titan, Silicium, Zirkonium, Cer und Zink aufgebracht werden.

Bevorzugt erfolgt die Zugabe der wasserlöslichen, sauer reagierenden Aluminiumverbindung und die Zugabe der wasserlöslichen, alkalisch reagierenden Aluminiumverbindung gleichzeitig und zwar in der Weise, daß der pH-Wert der Suspension während der gesamten Zugabezeit konstant ist und zwischen 4 und 10 liegt, besonders bevorzugt zwischen 5 und 9, ganz besonders bevorzugt zwischen 6 und 8.

Die Temperatur der Suspension wird vorzugsweise zwischen 25 und 70°C gehalten.

Als Pigmente werden bevorzugt Titandioxid und Eisenoxide eingesetzt.

Die nach dem erfindungsgemäßen Verfahren hergestellten Pigmente und Füllstoffe werden zur Einfärbung von Farben, Lacken, Kunststoffen und Papier verwendet. Zur Anpassung des Pigments oder Füllstoffs an das Verarbeitungsmedium, in dem das Pigment oder der Füllstoff verwendet wird, wird gegebenenfalls vor oder nach, bevorzugt nach der Waschung oder vor oder nach der abschließenden Mahlung (Desagglomerierung) das Pigment oder der Füllstoff mit einem organischen Überzugsmittel modifiziert.

Das erfindungsgemäße Verfahren zeichnet sich durch einen geringen Waschwasserbedarf bei der Waschung der Pigmente oder Füllstoffe aus. Dies bedeutet, daß bei der Herstellung der Pigmente und Füllstoffe bei gleicher Qualität und gleichen anwendungstechnischen Eigenschaften wenig Abwässer anfallen, für eine gegebene Produktmenge eine geringere Filterfläche benötigt wird oder auf einer gegebenen Filterfläche eine größere Produktmenge ausgewaschen werden kann.

Außerdem ermöglicht das erfindungsgemäße Verfahren, bei gleichem Waschwassereinsatz wie bei herkömmlich behandelten Pigmenten und Füllstoffen, qualitativ höherwertige Produkte zu erhalten.

Die Erfindung soll anhand der nachfolgenden Beispiele näher erläutert werden.

### Beispiel 1

Ein nach dem Sulfatverfahren hergestelltes TiO₂-Rutilpigment wurde wie folgt anorganisch nachbehandelt:
3,0 kg gemahlenes TiO₂-Pigment wurden unter Zusatz eines Dispersionsmittels in 9,0 l Wasser dispergiert. Während der gesamten Nachbehandlung wurde die Suspension gerührt und auf 60°C gehalten. Der pH-Wert der Suspension lag bei pH 10,6. Zu der geruhrten Suspension wurden innerhalb von 15 Minuten 268 ml Titanylsulfatlösung (120 g/l TiO₂) entsprechend 1,07 Gew.-% TiO₂, bezogen auf eingesetztes Pigment, zugesetzt. Der pH-Wert lag danach bei 1,3. Nach 5 Minuten Nachruhrzeit wurden innerhalb von 15 Minuten 69 ml Natriumwasserglaslösung (350 g/l SiO₂), entsprechend 0,8 Gew.-% SiO₂, bezogen auf eingesetztes Pigment, zugegeben. Der pH-Wert lag danach bei pH 1,4. Nach 5 Minuten Nachrührzeit wurden innerhalb von 15 Minuten 231 ml Natriumaluminatlösung (260 g/l Al₂O₃), entsprechend 2,0 Gew.-% Al₂O₃, bezogen auf eingesetztes Pigment, zugesetzt. Nach einer Nachrührzeit von 5 Minuten lag der pH-Wert der Suspension bei pH 9,2. Anschließend wurden innerhalb von 15 Minuten 60 ml Aluminiumsulfatlösung (100 g/l Al₂O₃), entsprechend 0,2 Gew.-% Al₂O₃, bezogen auf eingesetztes Pigment, zugesetzt. Der pH-Wert lag bei 7,5. Nach 30 Minuten Nachrührzeit wurde das nachbehandelte Pigment auf einer Nutsche bei 300 mbar über Blaubandfilter (Fa. Schleicher und Schuell) filtriert und mit 80°C heißem vollentsalzten Wasser im Gew.-Verhältnis von Wasser : Pigment von 6 : 1 gewaschen. Der spezifische Widerstand des Pigments lag bei 8 400 Ohm · cm.

### Beispiel 2 (Vergleich)

Ein nach dem Sulfatverfahren hergestelltes TiO₂-Rutilpigment wurde wie folgt anorganisch nachbehandelt:
3,0 kg gemahlenes TiO₂-Pigment wurden unter Zusatz eines Dispersionsmittels in 9,0 l Wasser dispergiert. Während der gesamten Nachbehandlung wurde die Suspension gerührt und auf 60°C gehalten. Der pH-Wert der Suspension lag bei pH 10,6. Zu der gerührten Suspension wurden innerhalb von 15 Minuten 268 ml Titanylsulfatlösung (120 g/l TiO₂) entsprechend 1,07 Gew.-% TiO₂, bezogen auf eingesetztes Pigment, zugesetzt. Der pH-Wert lag danach bei 1,3. Nach 5 Minuten Nachrührzeit wurden innerhalb von 15 Minuten 69 ml Natriumwasserglaslösung (350 g/l SiO₂), entsprechend 0,8 Gew.-% SiO₂, bezogen auf eingesetztes Pigment, zugegeben. Nach 5 Minuten Nachrührzeit wurden innerhalb von 15 Minuten durch Zugabe von Natronlauge (50 Gew.-%) ein pH-Wert von 7,0 eingestellt. Anschließend wurden innerhalb von 15 Minuten 204 ml Natronlauge (50 Gew.-%) zugesetzt. Nach 5 Minuten Nachrührzeit lag der pH-Wert bei 12,0. Anschließend wurden 60 ml Aluminiumsulfatlösung (100 g/l Al₂O₃), entsprechend 2,2 Gew.-% Al₂O₃, bezogen auf eingesetztes Pigment, innerhalb von 15 Minuten zugesetzt. Nach einer Nachrührzeit von 30 Minuten lag der pH-Wert der Suspension bei 7,5. Nach 5 Minuten Nachrührzeit wurde das nachbehandelte Pigment auf einer Nutsche bei 300 mbar über Blaubandfilter (Fa. Schleicher und Schuell) filtriert und mit 80°C heißem destilliertem Wasser im Gew.-Verhältnis von Wasser : Pigment von 10 : 1 gewaschen. Der spezifische Widerstand des Pigments lag bei 8 200 Ohm · cm. Das erfindungsgemäße Verfahren führt bei gleicher Qualität des Pigments zu einer Waschwassereinsparung von 40 %.

### Beispiel 3

Ein nach dem Sulfatverfahren hergestelltes TiO₂-Rutilpigment wurde wie folgt anorganisch nachbehandelt:
4,0 kg gemahlenes TiO₂-Pigment wurden unter Zusatz eines Dispersionsmittels in 12 l Wasser dispergiert. Während der gesamten Nachbehandlung wurde die Suspension gerührt und bei 35°C gehalten. Der pH-Wert der Suspension lag bei pH 11,9. Zu der gerührten Suspension wurden innerhalb von 10 Minuten 60 ml Titanylsulfatlösung (120 g/l TiO₂) entsprechend 0,18 Gew.-% TiO₂, bezogen auf eingesetztes Pigment, zugesetzt. Der pH-Wert lag danach bei 6,5. Im Anschluß wurden innerhalb von 20 Minuten gleichzeitig 107 ml Titanylsulfatlösung (120 g/l TiO₂) entsprechend 0,32 Gew.-% TiO₂, bezogen auf eingesetztes Pigment und 53 ml Natriumaluminatlösung (303 g/l Al₂O₃), entsprechend 0,4 Gew.-% Al₂O₃, bezogen auf Pigment, zugesetzt. Nach einer Nachrührzeit von 15 Minuten lag der pH-Wert der Suspension bei 6,5. Anschließend wurden unter Beibehaltung des pH-Wertes von 6,5 innerhalb von 35 Minuten gleichzeitig 97 ml Aluminiumsulfatlösung (100 g/l Al₂O₃), entsprechend 0,24 Gew.-% Al₂O₃ und 49 ml Natriumaluminatlösung (303 g/l Al₂O₃), entsprechend 0,36 Gew.-% Al₂O₃, bezogen auf Pigment, zugegeben. Nach 15 Minuten Nachruhrzeit wurde das nachbehandelte Pigment auf einer Nutsche bei 300 mbar über Blaubandfilter (Fa. Schleicher und Schuell) filtriert und mit 80°C heißem destilliertem Wasser im Gew.-Verhältnis von Wasser : Pigment von 2 : 1 gewaschen. Der spezifische Widerstand des Pigments lag bei 10 500 Ohm · cm.

### Beispiel 4 (Vergleich)

Ein nach dem Sulfatverfahren hergestelltes TiO₂-Rutilpigment wurde wie folgt anorganisch nachbehandelt:
4,0 kg gemahlenes TiO₂-Pigment wurden unter Zusatz eines Dispergiermittels in 12 l Wasser dispergiert. Während der gesamten Nachbehandlung wurde die Suspension gerührt und bei 35°C gehalten. Der pH-Wert der Suspension lag bei 12,0. Zu der gerührten Suspension wurden innerhalb von 15 Minuten 167 ml Titanylsulfatlösung (120 g/l TiO₂), entsprechend 0,5 Gew.-% TiO₂, bezogen auf eingesetztes Pigment, zugesetzt. Nach 5 Minuten Nachruhrzeit lag der pH-Wert der Suspension bei 1,6. Anschließend wurden innerhalb von 15 Minuten 149 ml Natronlauge (50 Gew.-%) zugegeben. Nach 5 Minuten Nachrührzeit lag der pH-Wert der Suspension bei 13,2. Anschließend wurden innerhalb von 15 Minuten 400 ml Aluminiumsulfatlösung (100 g/l Al₂O₃), entsprechend 1,0 Gew.-% Al₂O₃, bezogen auf Pigment, zugegeben. Nach 5 Minuten Nachrührzeit lag der pH-Wert bei 6,0. Innerhalb von 15 Minuten wurde durch Zugabe von Natronlauge ein pH-wert von 7,0 eingestellt. Nach 5 Minuten Nachrührzeit wurde das nachbehandelte Pigment auf einer Nutsche bei 300 mbar über Blaubandfilter (Fa. Schleicher und Schuell) filtriert und mit 80°C heißem destilliertem Wasser im Gew.-Verhältnis von Wasser : Pigment von 2 :1 gewaschen. Der spezifische Widerstand des Pigments lag bei 6500 Ohm · cm. Bei gleichem Waschwasserverbrauch konnte durch das erfindungsgemäße Verfahren der spezifische Widerstand um 61,5 % verbessert werden.

## Patentansprüche

1. Verfahren zur Herstellung von anorganisch beschichteten Pigmenten oder Füllstoffen, wobei eine wässrige Suspension des entsprechenden unbehandelten Pigments oder Füllstoffs vorgelegt wird, mindestens eine Schicht eines Oxids, Hydroxids oder Oxidhydrats eines oder mehrerer Metalle aus der Gruppe bestehend aus Titan, Aluminium, Zirkonium, Silicium, Cer und Zink durch Zugabe der entsprechenden Metallsalzlösungen aufgefällt wird, wobei die äußerste Schicht eine Schicht aus Hydroxid oder Oxidhydrat des Aluminiums ist, die wässrige Suspension vor Abtrennung der Pigmente oder Füllstoffe etwa neutral gestellt wird, die so behandelten Pigmente oder Füllstoffe abgetrennt werden, die abgetrennten Pigmente oder Füllstoffe gewaschen, gegebenenfalls getrocknet und organisch modifiziert werden und dann desagglomeriert werden, dadurch gekennzeichnet, daß zur Herstellung der äußeren Schicht aus Aluminiumhydroxid oder Aluminiumoxidhydrat eine sauer reagierende, wasserlösliche Verbindung des Aluminiums in einer Menge von 0,1 bis 3 Gew.-%, berechnet als Al₂O₃ und bezogen auf Pigment bzw. Füllstoff, und eine wasserlösliche, alkalisch reagierende Verbindung des Aluminiums in einer Menge von 0,1 bis 3 Gew.-%, berechnet als Al₂O₃ und bezogen auf Pigment bzw. Füllstoff, der Pigment- oder Füllstoffsuspension gleichzeitig oder nacheinander zugesetzt werden und zwar in einem solchen Mengenverhältnis, daß sich am Ende der Zugabe ein pH-Wert von 4 bis 10 in der Suspension einstellt, ohne daß weitere sauer oder alkalisch reagierende Komponenten zugesetzt werden.

2. Verfahren gemäß Anspruch 1, dadurch gekennzeichnet, daß die Zugabe der wasserlöslichen, sauer reagierenden Aluminiumverbindung und die Zugabe der wasserlöslichen, alkalisch reagierenden Aluminiumverbindung gleichzeitig erfolgt und zwar in einer Weise, daß der pH-Wert der Suspension während der gesamten Zugabezeit konstant ist und zwischen 4 und 10 liegt.

3. Verfahren gemäß Anspruch 2, dadurch gekennzeichnet, daß der pH-Wert der Suspension während der Zugabe der sauer und alkalisch reagierenden Aluminiumverbindungen zwischen 5 und 9 liegt.

4. Verfahren gemäß Anspruch 2, dadurch gekennzeichnet, daß der pH-Wert der Suspension während der Zugabe der sauer und alkalisch reagierenden Aluminiumverbindungen zwischen 6 und 8 liegt.

5. Verfahren gemäß einem oder mehreren der Ansprüche 1 bis 4, dadurch gekennzeichnet, daß die Temperatur der Suspension zwischen 25° und 70°C gehalten wird.

6. Verfahren gemäß einem oder mehreren der Ansprüche 1 bis 5, dadurch gekennzeichnet, daß als Pigment Titandioxid eingesetzt wird.

7. Verfahren gemäß einem oder mehreren der Ansprüche 1 bis 5, dadurch gekennzeichnet, daß als Pigment Eisenoxid eingesetzt wird.

8. Verwendung der nach den Ansprüchen 1 bis 7 hergestellten Pigmente und Füllstoffe zur Einfärbung von Farben, Lacken, Kunststoffen und Papier.
